# EUROPÄISCHE PATENTSCHRIFT

(11) **EP 1 762 997 B1**
(45) Veröffentlichungstag und Bekanntmachung des Hinweises auf die Patenterteilung: **09.01.2008**
(21) Anmeldenummer: 05108348.3
(22) Anmeldetag: 12.09.2005
(51) Int. Cl.: G08B 25/14

(54) **Konfiguration einer Zentrale eines Gefahrenmeldesystems**
Configuration of an alarm panel
Configuration d'un panneau d'alarme

(43) Veröffentlichungstag der Anmeldung: 14.03.2007
(73) Patentinhaber: Siemens Schweiz AG, 8047 Zürich (CH)
(72) Erfinder: Schütte, Markus, 3428 Wiler (CH)
(74) Vertreter: Maier, Daniel Oliver

(56) Entgegenhaltungen:
- US-B1- 6 380 850

## Beschreibung

Die Erfindung beschreibt ein Verfahren und ein System zum Konfigurieren einer Zentrale eines Gefahrenmeldesystems mit einem mindestens eine Konfigurations-Information enthaltenden Konfigurationsdatensatz.

Gefahrenmeldesysteme, wie zum Beispiel Meldesysteme für Feuer, Gas, Temperatur etc. bestehen meist aus Detektoren, die mit einer Zentrale verbunden sind. Solche Gefahrenmeldesysteme werden in öffentlichen Gebäuden, Bürogebäuden, Hotels, Industriegebäuden, Flughäfen, Bahnhöfen, Werkstätten, Schulen etc. eingesetzt. Wird ein Alarm an einem der Detektoren ausgelöst, wird die Zentrale benachrichtigt. Die Funktionen der Zentrale sind frei parametrierbar und unterstützen eine dem zu überwachenden Objekt angepasste Alarmorganisation. Solche Zentralen besitzen meist ein integriertes Bedienteil mit einer graphischen Anzeige und Schnittstellen zu Kommunikationsnetzen. Eine solche Zentrale muss vor Inbetriebnahme eingerichtet bzw. konfiguriert werden. Hierbei werden die zu verwendende Sprache, die Landesnormen und -vorschriften, die verwendeten Detektoren, die Anzahl und die Parametrisierung der Detektoren, die Gefahrenmeldezentrale konfiguriert bzw. angepasst. Bislang wird für jede Gefahrenmeldezentrale eine eigene Konfiguration erstellt und diese muss auf Kundenwünsche angepasst werden. So kann es eine Vielzahl verschiedener Konfigurationen einer Gefahrenmeldesystems geben, die natürlich einzeln gepflegt werden müssen. Wird zum Beispiel in einem Land eine Norm geändert, muss in jeder der Konfigurationsversionen eine Änderung gemacht werden.

US-6380850 befasst sich mit einer Alarmzentrale, die in zwei Ländern mit verschiedenen Normen benutzt werden kann.

Die Aufgabe der vorliegenden Erfindung ist darin zu sehen, ein effizientes und kosteneffektives Verfahren und System zum Konfigurieren eines Gefahrenmeldesystems vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass zum Konfigurieren eines Gefahrenmeldesystems ein erster mindestens eine erste Konfigurations-Information enthaltender Datensatz abhängig mindestens einer ersten Regel erstellt wird. So könnte zum Beispiel ein Datensatz für Gefahrenmeldesysteme für eine Region der Erde, also je ein Datensatz zum Beispiel für Asien, Amerika, Afrika, Europa etc. erstellt werden. Selbstverständlich ist eine solche Einteilung willkürlich und kann beliebig, je nach Anforderungen, geschehen. Danach wird zum Beispiel für ein Land aus der Region ein zweiter Datensatz abhängig vom ersten Datensatz und abhängig mindestens einer zweiten Regel erstellt. Idealerweise werden bei der Erstellung des zweiten Datensatzes die zu konfigurierenden Informationen eingeschränkt, sodass der zweite Datensatz eine Teilmenge des ersten Datensatzes darstellt, der durch die mindestens eine zweite Regel an die Landesnormen und -vorschriften, der Landes-Sprache, der betreffenden Gefahrenmeldezentrale etc. angepasst ist. In Abhängigkeit dieses zweiten Datensatzes wird dann ein mindestens eine Konfigurations-Information enthaltender Konfigurationsdatensatz für die betreffende Gefahrenmeldezentrale erstellt. Dabei wird mindestens eine dritte Regel bei der Erstellung des Konfigurationsdatensatzes verwendet. So können zum Beispiel gerätespezifische und kundenspezifische Anforderungen berücksichtigt werden. Der Konfigurationsdatensatz wird schließlich zur Konfiguration der betreffenden Gefahrenmeldezentrale verwendet.

Mit Hilfe einer Regel können somit die Konfiguration-Informationen in einem Datensatz bzw. Konfigurations-Datensatz erstellt, erzeugt bzw. angepasst werden. Die Konfigurations-Informationen stellen die Informationen betreffend die zu verwendende Sprache, Landesnormen, Vorschriften, die verwendete Zentrale des Gefahrenmeldesystems, das verwendete Gefahrenmeldesystem etc. dar und werden je nach Datensatz bzw. Konfigurations-Datensatz definiert. Durch diese kasskadenförmige Erstellung eines Konfigurationsdatensatzes wird eine aufwendige kosteneffektive Pflege von mehreren parallel existierenden Konfigurationsdatensätzen vermieden. Ein weiterer Vorteil besteht darin, dass die Konfigurationsmöglichkeiten bei der Erstellung eines Datensatzes bzw. eines Konfigurationsdatensatzes derart eingeschränkt werden, sodass nur solche Konfigurations-Informationen angepasst werden müssen, die auch im betreffenden Land bei der betreffenden Gefahrenmeldezentrale benötigt werden. Es werden also vom ersten Datensatz über den zweiten Datensatz zum Konfigurationsdatensatz die Freiheitsgrade der möglichen Konfigurations-Informationen eingeschränkt. Der Datensatz bzw. der Konfigurationsdatensatz kann eine Tabelle, eine Datenbank etc. sein. Es sei noch bemerkt, dass es selbstverständlich auch möglich ist, dass nur zwei Schritte, also ein erster Datensatz und ein Konfigurationsdatensatz oder mehr als drei Schritte zur Erstellung des Konfigurationsdatensatzes erfindungsgemäss möglich sind.

Ein weiterer Vorteil besteht darin, dass durch das erfindungsgemässe Verfahren bzw. durch das erfindungsgemässe System das Risiko für Fehlkonfigurationen erheblich reduziert werden kann

Die Erfindung wird anhand eines in einer Figur dargestellten Ausführungsbeispiels näher erläutert. Dabei zeigen
- Figur 1: ein Beispiel für das Erstellen eines Konfigurationsdatensatzes,
- Figur 2: ein System zum erfindungsgemässen Erstellen eines Konfigurationsdatensatzes.

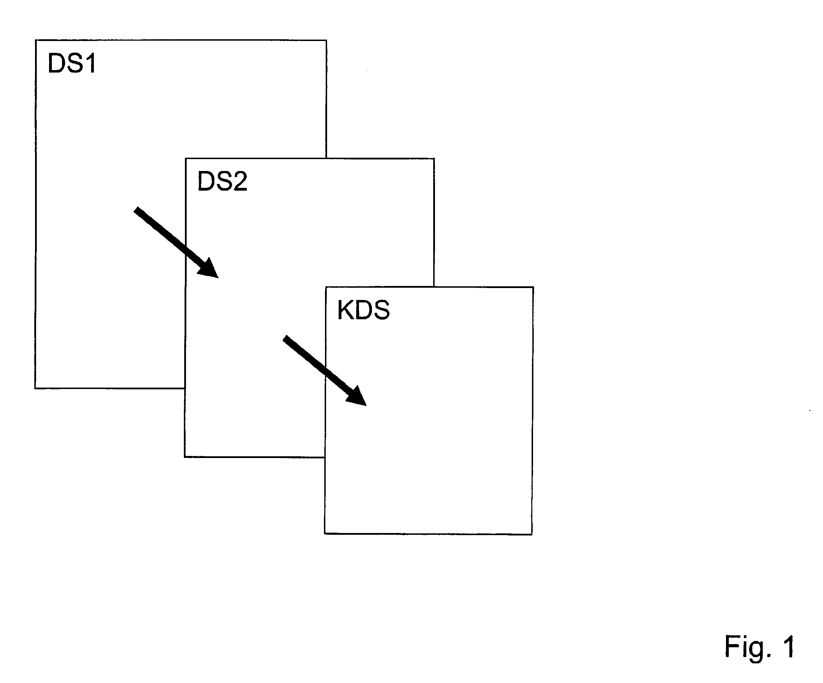

Figur 1 zeigt ein Beispiel für das Erstellen eines Konfigurationsdatensatzes. Hierzu wird zunächst ein erster mindestens eine Konfigurations-Information enthaltender Datensatz DS1, zum Beispiel für eine Region der Erde (Asien, Afrika, Amerika, Südamerika, Australien, Europa etc.), unter Verwendung mindestens einer ersten Regel erstellt. In Abhängigkeit dieses ersten Datensatzes DS1 wird unter Verwendung mindestens einer zweiten Regel ein zweiter Datensatz DS2 erstellt. So können zum Beispiel die Konfiguration-Informationen betreffend einer Region der Erde aus dem ersten Datensatz DS1 mit Hilfe mindestens der zweiten Regel so eingeschränkt werden, dass die Konfigurations-Informationen für ein Land und dessen Normen, Vorschriften, Sprache etc. eingeschränkt werden. Vom Datensatz DS1 zum Datensatz DS2 werden also zum Beispiel die Freiheitsgrade der möglichen Konfigurations-Informationen beschränkt. In Abhängigkeit dieses zweiten Datensatzes DS2 kann dann unter Verwendung mindestens einer dritten Regel der Konfigurationsdatensatz KDS erstellt werden. Der Konfigurationsdatensatz bzw. die Konfigurations-Informationen können abermals zum Beispiel auf kundenspezifische bzw. gerätespezifische Anforderung eingeschränkt werden. Selbstverständlich sind weitere Regeln zur Erstellung eines Kondigurationsdatensatzes denkbar. Erfindungsgemäss werden dazu keine Grenzen gesetzt. Der Konfigurationsdatensatz kann schließlich zur Konfiguration des zu konfigurierenden Gefahrenmeldesystems bzw. der Zentrale des Gefahrenmeldesystems ZGMS verwendet werden.

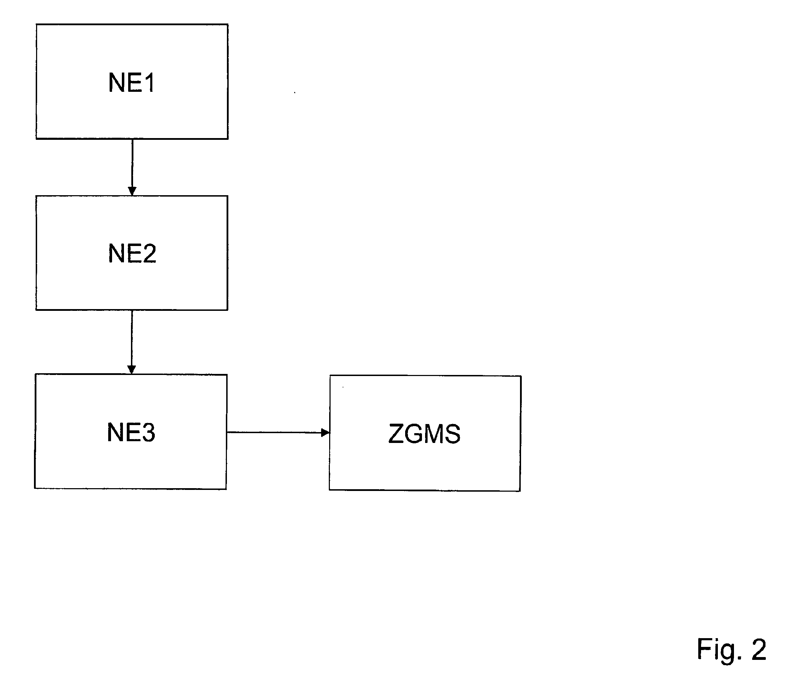

Figur 2 zeigt ein System zum erfindungsgemässen Erstellen eines Konfigurationsdatensatzes. Dazu ist es zum Beispiel möglich, dass der erste Datensatz DS1 in der ersten Einheit NE1 erstellt wird und zur zweiten Einheit NE2 weitergeleitet wird. Dort wird mit Hilfe des ersten Datensatzes DS1 der zweite Datensatz DS2 erstellt und zur dritten Einheit NE3 geleitet. Die dritte Einheit NE3 erstellt in Abhängigkeit des zweiten Datensatzes DS2 den Konfigurationsdatensatz KDS und damit wird die Zentrale des Gefahrenmeldesystems ZGMS konfiguriert. Die Einheiten NE1, NE2, NE3 können dabei über ein Kommunikationsnetz, wie zum Beispiel einem IP-Netz, einem Festnetz, einem zellularen Mobilfunknetz etc. miteinander verbunden sein. Selbstverständlich wäre es auch möglich, dass der erste Datensatz DS1, der zweite Datensatz DS2 und der Konfigurationsdatensatz KDS vor dem jeweiligen Weiterleiten an die Einheit NE1, NE2 bzw. NE3 bei einer dafür vorgesehenen Speichereinheit zwischengespeichert wird. Als Speichereinheit kann jeglicher Speicher in einem Computer, mobilen Computer, Mobilfunkendgerät etc. verwendet werden. Auch Speichermedien wie zum Beispiel eine CD-Rom, eine Diskette etc. könnte als Speicher dienen.

## Patentansprüche

1. Verfahren zum Konfigurieren einer Zentrale eines Gefahrenmeldesystems (ZGMS) mit einem mindestens eine Konfigurations-Information enthaltenden Konfigurationsdatensatz (KDS),
**dadurch gekennzeichnet,**
**dass** abhängig mindestens einer ersten Regel ein mindestens eine erste Konfigurations-Information enthaltender erster Datensatz (DS1) erstellt wird,
**dass** in Abhängigkeit des erstellten ersten Datensatzes (DS1) und mit mindestens einer zweiter Regel ein mindestens eine zweite Konfigurations-Information enthaltender zweiter Datensatz (DS2) erstellt wird und
**dass** in Abhängigkeit des erstellten zweiten Datensatzes (DS2) und mindestens einer dritten Regel ein mindestens eine dritte Konfigurations-Information enthaltender Konfigurationsdatensatz (KDS) erstellt wird, der für die Konfiguration der Zentrale eines Gefahrenmeldesystems (ZGMS) verwendet wird.

2. Verfahren nach Anspruch 1,
**dadurch gekennzeichnet,**
**dass** mit mindestens einer Regel die Konfigurations-Informationen abhängig der zu konfigurierenden Zentrale des Gefahrenmeldesystems (ZGMS) erzeugt werden.

3. Verfahren nach Anspruch 2,
**dadurch gekennzeichnet,**
**dass** als Konfigurations-Information eine Information betreffend die zu verwendende Sprache, Landesnormen, Vorschriften und/oder die Zentrale des Gefahrenmeldesystems (ZGMS) verwendet wird.

4. Verfahren nach einem der vorangegangenen Ansprüche,
**dadurch gekennzeichnet,**
**dass** mit der mindestens einen ersten Regel die mindestens eine erste Konfigurations-Information im ersten Datensatz (DS1) für die Region der Erde, in der die Zentrale des Gefahrenmeldesystems (ZGMS) konfiguriert werden soll, erzeugt wird.

5. Verfahren nach einem der vorangegangenen Ansprüche,
**dadurch gekennzeichnet,**
**dass** mit der mindestens einen zweiten Regel die mindestens eine zweite Konfigurations-Information im zweiten Datensatz (DS 2) für das Land, in der die Zentrale des Gefahrenmeldesystems (ZGMS) konfiguriert werden soll, erzeugt wird.

6. Verfahren nach einem der vorangegangenen Ansprüche,
**dadurch gekennzeichnet,**
**dass** mit der mindestens einen dritten Regel die mindestens eine dritte Konfigurations-Information im Konfigurationsdatensatz (KDS) für die zu verwendende Zentrale des Gefahrenmeldesystems (ZGMS) erzeugt wird.

7. Verfahren nach einem der vorangegangenen Ansprüche,
**dadurch gekennzeichnet,**
**dass** mit mindestens einer Regel beim Erstellen eines Datensatzes (DS1, DS2) und/oder Konfigurationsdatensatz (KDS) die Konfigurations-Möglichkeiten eingeschränkt werden.

8. Verfahren nach einem der vorangegangenen Ansprüche,
**dadurch gekennzeichnet,**
**dass** als Datensatz und Konfigurationsdatensatz eine Tabelle und/oder eine Datenbank verwendet wird.

9. System zum Konfigurieren einer Zentrale eines Gefahrenmeldesystems (ZGMS) mit einem mindestens eine Konfigurations-Information enthaltenden Konfigurationsdatensatz,
**dadurch gekennzeichnet,**
- mit einer ersten Einheit (NE1) zum Erstellen eines mindestens eine erste Konfigurations-Information enthaltenden ersten Datensatzes (DS1) abhängig mindestens einer ersten Regel,
- mit einer zweiten Einheit (NE2) zum Erstellen eines mindestens eine zweite Konfigurations-Information enthaltenden zweiten Datensatzes (DS2) in Abhängigkeit des erstellten ersten Datensatzes (DS1) und mit mindestens einer zweiter Regel und
- mit einer dritten Einheit (NE3) zum Erstellen eines mindestens eine dritte Konfigurations-Information enthaltenden Konfigurationsdatensatzes (KDS), der für die Konfiguration der Zentrale eines Gefahrenmeldesystems (ZGMS) verwendet wird, in Abhängigkeit des erstellten zweiten Datensatzes (DS2) und mit mindestens einer dritten Regel.

## Claims

1. Method for configuring a control centre in a risk detection system (ZGMS) with a configuration data set (KDS) containing at least one item of configuration information,
**characterised in that**,
a first data set (DS1) containing at least one first item of configuration information is created as a function of at least one first rule,
a second data set (DS2) containing at least one second item of configuration information is created as a function of the created first data set (DS1) and with at least one second rule and,
a configuration data set (KDS) containing at least one third item of configuration information is created as a function of the created second data set (DS2) and at least one third rule, said configuration data set (KDS) being used to configure the control centre in a risk detection system (ZGMS).

2. Method according to claim 1,
**characterised in that**
the configuration information is generated with at least one rule as a function of the control centre to be configured of the risk detection system (ZGMS).

3. Method according to claim 2,
**characterised in that**
an item of information relating to the language to be used, national standards, specifications and/or the control centre of the risk detection system (ZGMS) is used as configuration information.

4. Method according to one of the preceding claims,
**characterised in that**
with the at least one first rule, the at least one first item of configuration information is generated in the first data set (DS1) for the region of the world in which the control centre of the risk detection system (ZGMS) is to be configured.

5. Method according to one of the preceding claims,
**characterised in that**
with the at least one second rule, the at least one second item of configuration information in the second data set (DS 2) is generated for the country in which the control centre of the risk detection system (ZGMS) is to be configured.

6. Method according to one of the preceding claims,
**characterised in that**
with the at least one third rule, the at least one third item of configuration information is generated in the configuration data set (KDS) for the control centre to be used of the risk detection system (ZGMS).

7. Method according to one of the preceding claims,
**characterised in that**
with at least one rule, the configuration possibilities are restricted when a data set (DS1, DS2) and/or configuration data set (KDS) are created.

8. Method according to one of the preceding claims,
**characterised in that**
a table and/or a database is used as a data set and configuration data set.

9. System for configuring a control centre in a risk detection system (ZGMS) with a configuration data set containing at least one item of configuration information,
**characterised in that**
- with a first unit (NE1) for creating a first data set (DS1) containing at least one first item of configuration data as a function of at least one first rule,
- with a second unit (NE2) for creating a second data set (DS2) containing at least one second item of configuration information as a function of the created first data set (DS1) and with at least one second rule and
- with a third unit (NE3) for creating a configuration data set (KDS) containing at least one third item of configuration information, said configuration data set (KDS) being used to configure the control centre in a risk detection system, as a function of the created second data set (DS2) and with at least one third rule.

## Revendications

1. Procédé pour la configuration d'un central d'un système d'avertissement de danger (ZGMS) comprenant un ensemble de données de configuration (KDS) contenant au moins une information de configuration,
**caractérisé en ce que**
un premier ensemble de données (DS1) contenant au moins une première information de configuration est établi en fonction d'au moins une première règle,
**en ce que**, en fonction du premier ensemble de données (DS1) établi et avec au moins une seconde règle, on établit un second ensemble de données (DS2) contenant au moins une seconde information de configuration et
**en ce que**, en fonction du second ensemble de données (DS2) élaboré et d'au moins une troisième règle, on établit un ensemble de données de configuration (KDS) contenant au moins une troisième information de configuration, lequel ensemble est utilisé pour la configuration du central d'un système d'avertissement de danger (ZGMS).

2. Procédé selon la revendication 1,
**caractérisé en ce que**
les informations de configuration sont générées avec au moins une règle en fonction du central à configurer du système d'avertissement de danger (ZGMS).

3. Procédé selon la revendication 2,
**caractérisé en ce que**,
comme information de configuration, on utilise une information concernant la langue à utiliser, les normes du pays, les prescriptions et/ou le central du système d'avertissement de danger (ZGMS).

4. Procédé selon l'une quelconque des revendications précédentes,
**caractérisé en ce que**,
avec l'au moins une première règle, on génère l'au moins une première information de configuration dans le premier ensemble de données (DS1) pour la région de la terre, dans laquelle le central du système d'avertissement de danger (ZGMS) doit être configuré.

5. Procédé selon l'une quelconque des revendications précédentes,
**caractérisé en ce que**,
avec l'au moins une seconde règle, on génère l'au moins une seconde information de configuration dans le second ensemble de données (DS2) pour le pays, dans laquelle le central du système d'avertissement de danger (ZGMS) doit être configuré.

6. Procédé selon l'une quelconque des revendications précédentes,
**caractérisé en ce que**,
avec l'au moins une troisième règle, on génère l'au moins une troisième information de configuration dans l'ensemble de données de configuration (KDS) pour le central à utiliser du système d'avertissement de danger (ZGMS).

7. Procédé selon l'une quelconque des revendications précédentes,
**caractérisé en ce que**
les possibilités de configuration sont limitées avec au moins une règle lors de l'élaboration d'un ensemble de données (DS1, DS2) et/ou d'un ensemble de données de configuration (KDS).

8. Procédé selon l'une quelconque des revendications précédentes,
**caractérisé en ce que**
un tableau et/ou une banque de données est utilisé comme ensemble de données et ensemble de données de configuration.

9. Système pour configurer un central d'un système d'avertissement de danger (ZGMS) comprenant un ensemble de données de configuration contenant au moins une information de configuration,
**caractérisé**
- avec une première unité (NE1) pour l'établissement d'un premier ensemble de données (DS1) contenant au moins une première information de configuration en fonction d'au moins une première règle,
- avec une seconde unité (NE2) pour l'établissement d'un second ensemble de données (DS2) contenant au moins une seconde information de configuration en fonction du premier ensemble de données (DS1) établi et avec au moins une seconde règle et
- avec une troisième unité (NE3) pour l'établissement d'un ensemble de données de configuration (KDS) contenant au moins une troisième information de configuration, qui est utilisé pour la configuration du central d'un système d'avertissement de danger (ZGMS), en fonction du second ensemble de données (DS2) élaboré et avec au moins une troisième règle.
